# EUROPEAN PATENT APPLICATION

(11) **EP 4 800 357 A1**
(43) Date of publication of application: **02.09.2026**
(21) Application number: 26150493.0
(22) Date of filing: 07.01.2026
(51) Int. Cl.: G01C 22/00

(54) **STEP MEASUREMENT DEVICE, STEP MEASURING METHOD, AND PROGRAM**

(30) Priority: 28.02.2025 JP 2025031109
(71) Applicant: Casio Computer Co., Ltd., Tokyo 151-8543 (JP)
(72) Inventor: Oikawa, Shuto, Hamura-shi, Tokyo, 205-8555 (JP)
(74) Representative: Grünecker Patent- und Rechtsanwälte PartG mbB

(57) **Abstract**

A step measurement device (100) includes a body motion detector (150) to acquire a magnitude of a body motion as a sensor value, and a controller (110). The body motion detector (150) operates in either a motion detection mode for determining whether the acquired sensor value exceeds a predetermined threshold value and a sensor value output mode for outputting the sensor value at predetermined time intervals as an operation mode of the body motion detector (150). The operation mode of the body motion detector (150) transits from the motion detection mode to the sensor value output mode in response to a determination being made in the motion detection mode that the sensor value exceeds the threshold value. The controller (110) extracts data groups from a plurality of the sensor values output in the sensor value output mode, in response to a determination being made that the extracted data groups satisfy a step count condition, increments a step count by a number of times the step count condition has been satisfied, and further increments the step count by one in response to a determination being made, in incrementing the step count in response to the step count condition being satisfied, that a step count complementation condition is satisfied.

## Description

The present disclosure relates to a step measurement device, a step measuring method, and a program.

Step measurement devices (pedometers) are developed heretofore that measure the number of steps taken by a user while walking. Since the majority of step measurement devices are powered by batteries, technologies are also developed to reduce power consumption to enable longer runtime. For example, Unexamined Japanese Patent Application Publication No. 2009-98947 discloses a pedometer that operates intermittently to achieve low power consumption through intermittent operation while enabling high step-measurement accuracy.

The pedometer disclosed in Unexamined Japanese Patent Application Publication No. 2009-98947 achieves low power consumption with the configuration of determining that walking has stopped upon non-detection of a walking signal for a predetermined period of time and then switching from continuous operation to intermittent operation (operation with alternation of an inactive period and a detection period). However, in such conventional pedometers, the number of steps taken during the inactive period can only be estimated from the step pitch detected during the periods before and after the inactive period, leaving a room for improvement in accuracy of step measurement.

A step measurement device (100) according to an aspect of the present disclosure includes
a body motion detector (150) to acquire a magnitude of a body motion as a sensor value, the body motion detector (150) being to operate in either a motion detection mode or a sensor value output mode as an operation mode of the body motion detector (150), the motion detection mode being for determining whether the acquired sensor value exceeds a predetermined threshold value, the sensor value output mode being for outputting the sensor value at predetermined time intervals, the operation mode of the body motion detector (150) being to transit from the motion detection mode to the sensor value output mode in response to a determination being made in the motion detection mode that the sensor value exceeds the threshold value; and
a controller (110), in which
the controller (110)
   extracts data groups from a plurality of the sensor values output in the sensor value output mode,
   in response to a determination being made that the extracted data groups satisfy a step count condition, increments a step count by a number of times the step count condition has been satisfied, and
   further increments the step count by one in response to a determination being made, in incrementing the step count in response to the step count condition being satisfied, that a step count complementation condition is satisfied.

A more complete understanding of this application can be obtained when the following detailed description is considered in conjunction with the following drawings, in which:
FIG. 1 is a block diagram illustrating an example of functional configuration of a step measurement device according to an embodiment;
FIG. 2 illustrates an example of a relationship between periodic processing and FIFO buffer read processing in a case of employing an interrupt notification method;
FIG. 3 illustrates an example of a relationship between periodic processing and FIFO buffer read processing in a case of employing a periodic reading method;
FIG. 4 is a diagram for explanation of a manner of transition of an operation mode of a body motion detector;
FIG. 5 is a diagram for explanation of data groups read in response to transition of the body motion detector from a motion detection mode to a sensor value output mode; and
FIG. 6 is an example of a flowchart of step measurement processing according to the embodiment.

A step measurement device and the like according to an embodiment are described below with reference to the drawings. In the drawings, the same or corresponding portions are assigned the same reference sign.

The step measurement device according to the embodiment is an information processing device that is wearable on a body (for example, an arm) or clothing (for example, a belt) of a user and that can count the number of steps taken by the user with a motion sensor, such as a pedometer, digital watch, or smart watch.

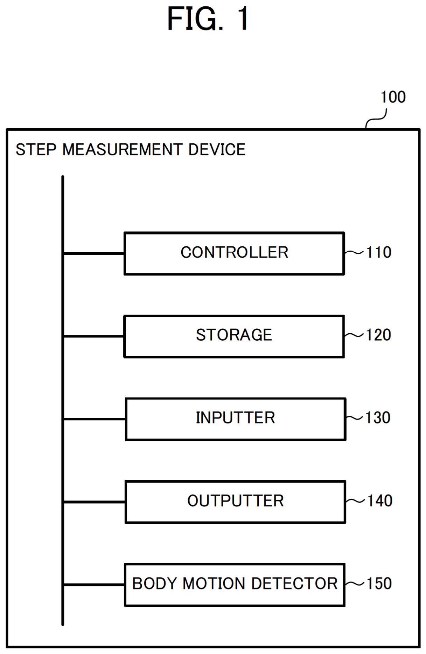

As illustrated in FIG. 1, a step measurement device 100 includes a controller 110, a storage 120, an inputter 130, an outputter 140, and a body motion detector 150.

The controller 110 includes, for example, a processor, such as a central processing unit (CPU). The controller 110 executes, by a program stored in the storage 120, processing for achieving various functions of the step measurement device 100 and step measurement processing that is described below, and the like. Additionally, the controller 110 has a timer function and is capable of measuring time, timekeeping, and the like. Furthermore, the controller 110 is compatible with multithreading, and can execute a plurality of processings in parallel.

The storage 120 stores the program to be executed by the controller 110 and necessary data. The storage 120 may include random access memory (RAM), read-only memory (ROM), flash memory, or the like, but is not limited thereto. The storage 120 may be provided inside the controller 110.

The inputter 130 is a user interface such as a push button switch, a touch panel, or the like, and receives input operations from the user. In the case of the configuration in which the inputter 130 includes a touch panel, the touch panel may be implemented as a touch panel that is integrated with a display of the outputter 140.

The outputter 140 includes a display such as a liquid crystal display, an organic electroluminescence (EL) display, or the like, and displays display screens, operation screens, and the like that provide the functions of the step measurement device 100.

The body motion detector 150 is a motion sensor that detects a body motion of the user and acquires a magnitude of the body motion as a sensor value. In the present embodiment, the body motion detector 150 includes an acceleration sensor that detects acceleration in each direction of three axes (X-axis, Y-axis, Z-axis) that are orthogonal to each other. The body motion detector 150 includes a First-In First-Out (FIFO) buffer of a predetermined size (for example, 1 kilobyte) and accumulates in this FIFO buffer, as sensor values, acceleration data (values in respective directions of the three axes) acquired at each cycle in a predetermined sampling period (for example, 0.1 second). The body motion detector 150 may include an angular rate sensor (gyro sensor) to detect angular rate instead of or in addition to acceleration, or may include a geomagnetic sensor to detect geomagnetism. In this case, the FIFO buffer is taken to accumulate, as the sensor values, angular rate data and geomagnetic data instead of or in addition to acceleration data.

Since the size of the FIFO buffer is limited, the data accumulated in the buffer is to be read by the controller 110 before the buffer overflows (the reading of all the data accumulated in the FIFO buffer by the controller 110 causes the FIFO buffer to be cleared, allowing the FIFO buffer to return to a state of capable of accumulating up to its maximum capacity).

To prevent the FIFO buffer from overflowing, the body motion detector 150 has a function for generating an interrupt (FIFO interrupt) and notify the controller 110 in response to accumulation of a predetermined number (for example, 20 sets) of acceleration data.

However, the controller 110 normally executes processing for measuring the number of steps periodically (periodic processing), and occurrence of a FIFO interrupt may possibly disrupt this periodic processing.

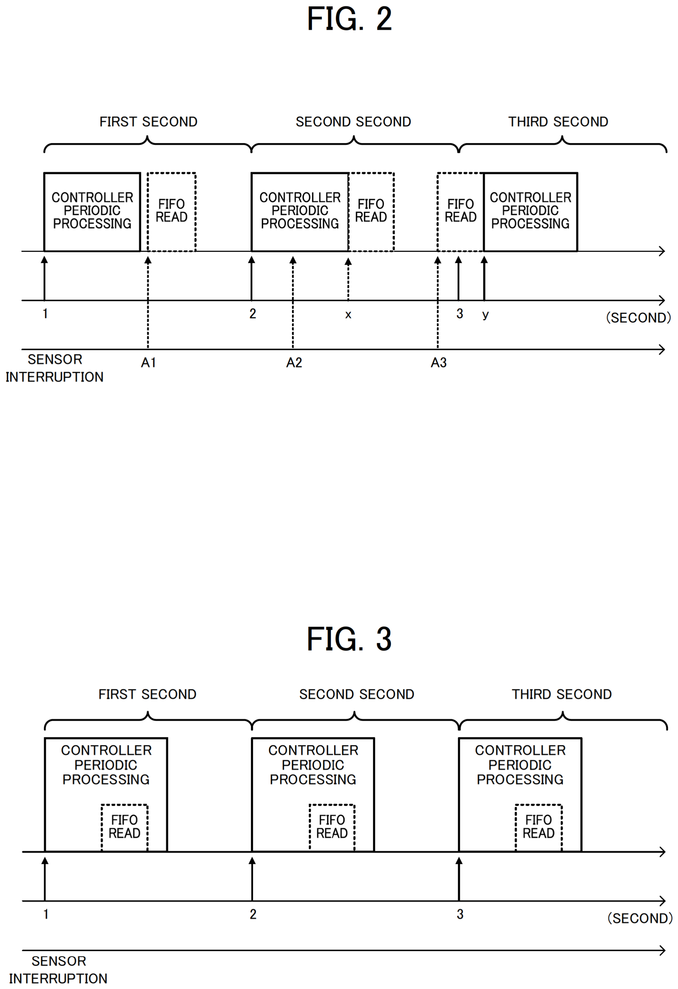

For example, the controller 110 is taken to execute the periodic processing every second and read data from the FIFO buffer upon each occurrence of this FIFO interrupt (such processing method is called the interrupt notification method). Using this interrupt notification method produces a conflict between the periodic processing and the FIFO buffer read processing, as illustrated in FIG. 2. FIGS. 2 and 3 illustrate that the periodic processing is executed by the controller 110 at the portions described as "controller periodic processing" and the FIFO buffer read processing is executed by the controller 110 at the portions described as "FIFO read".

In the example illustrated in FIG. 2, a FIFO interrupt occurs at time point A2 in the middle of the periodic processing at the second second, delaying the start of the FIFO buffer read processing until time point x. Additionally, since the time point at exactly the third second is in the middle of the FIFO buffer read processing of which execution is started due to occurrence of the FIFO interrupt at time point A3, the start of the periodic processing at the third second is delayed until time point y. Although FIG. 2 illustrates a case where the controller 110 does not use a multi-threading function to prioritize ease of understanding, even in the case of using a multi-threading function, more overhead of thread switching is incurred, resulting in further increase in processing time and power consumption.

As illustrated in FIG. 2, using FIFO interrupts creates overhead in processing in the controller 110 and increases power consumption. Thus, from the viewpoint of reducing power consumption, a method that disables FIFO interrupts and performs FIFO buffer read processing within the periodic processing of the controller 110 is considered better (such a processing method is called a periodic reading method.) Using the periodic reading method allows the controller 110 to execute the FIFO buffer read processing stably within the periodic processing as illustrated in FIG. 3, resulting a reduction in wasteful processing and power consumption.

In this case, however, since the controller 110 executes the FIFO buffer read processing regardless of the number of data sets accumulated in the FIFO buffer, the number of data sets read may become unstable (increase or decrease considerably). To detect abnormalities related to this instability, a method exists in which upper and lower limits are set for the number of data sets read from the FIFO buffer, and in the case of not falling within the upper and lower limits, the controller 110 determines as abnormal and executes error processing.

In the present embodiment, from the viewpoint of processing efficiency and power consumption, the controller 110 is taken to execute processing using the periodic reading method with disabling of FIFO interrupts and execute error processing in the case where the number of data sets read from the FIFO buffer does not fall within upper and lower limits.

The body motion detector 150 has two operation modes, one being a mode that enables only motion detection with low power consumption (motion detection mode), the other being a mode that enables accumulation of sensor values detected at predetermined time intervals in the FIFO buffer and allows the controller 110 to read the sensor values (sensor value output mode). The sensor value output mode is a mode for performing typical operations as a sensor and thus is also called the normal operation mode. The motion detection mode is a mode for performing operations while saving power consumption and thus is also called the power-saving operation mode.

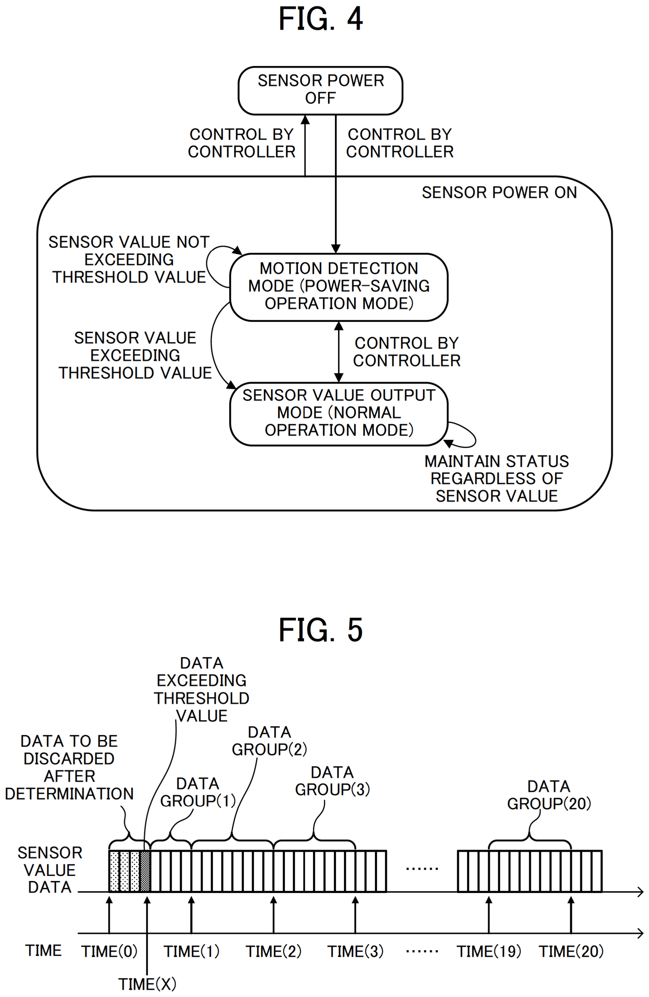

As illustrated in FIG. 4, in the motion detection mode, a predetermined threshold value and the current sensor values are compared inside the body motion detector 150, and the motion detection mode is maintained as long as the threshold value is not exceeded. In response to the sensor value exceeding the threshold value, the body motion detector 150 itself switches the operation mode to the sensor value output mode, and thereafter maintains the sensor value output mode regardless of the sensor value. At the switching of the operation mode from the motion detection mode to the sensor value output mode by the body motion detector 150 itself, the body motion detector 150 can cause an operation mode transition interrupt to be occurred and notify the controller 110 of the transition in the operation mode.

As illustrated in FIG. 4, the body motion detector 150 in the motion detection mode can switch the operation mode without control by the controller 110 depending on whether the sensor value exceeds the threshold value. Additionally, as illustrated in FIG. 4, switching of the operation mode and power ON/OFF of the body motion detector 150 can also be performed by control from the controller 110.

From the above, it is clear that the configuration is better in which the body motion detector 150 is activated in the motion detection mode and the controller 110 reads data from the FIFO buffer of the body motion detector 150 using the periodic reading method, in order to reduce power consumption of the step measurement device 100. However, upon the operation mode transition interrupt being used for notifying the controller 110 of the transition of the operation mode of the body motion detector 150 to the sensor value output mode, the periodic processing of the controller 110 is disrupted by this operation mode transition interrupt. In practice, the body motion detector 150 includes a terminal for notification of a current operation mode (operation mode notification terminal), and thus even without using the operation mode transition interrupt, the controller 110 can know the current operation mode of the body motion detector 150 by checking the state of the operation mode notification terminal (for example, High/Low). Thus, in the present embodiment, the operation mode transition interrupt is taken to be disabled and the controller 110 is taken to know the current operation mode of the body motion detector 150 by checking the state of the operation mode notification terminal.

The body motion detector 150 in the motion detection mode only executes processing for determining whether the sensor value exceeds the threshold value and cannot output the sensor value. Thus, for example, in response to the user starting to move the body of the user at time (X) that is a time, as illustrated in FIG. 5, the sensor value data up to time (X) that is a time point at which the sensor value exceeds the threshold value is discarded, and the sensor value data to be output is only the data after time (X). Step measurement using data groups of such sensor value may possibly result in failing to count the first step of the walking of the user.

For example, in the case where the user starts walking from a standstill, since the first acceleration data at the beginning of the walking is discarded, the first step is almost certainly not counted. Thus, in the present embodiment, in response to a determination being made that the user has started walking from a standstill (in response to the data groups of acceleration for a predetermined period of time (for example, twenty seconds) after the transition to the sensor value output mode indicating walking), the step count calculated from the sensor values is incremented by one. This increment by one of the step count may be performed at a time point at which the operation mode of the body motion detector 150 switches from the motion detection mode to the sensor value output mode (for example, any time point between time (X) and time (2) illustrated in FIG. 5).

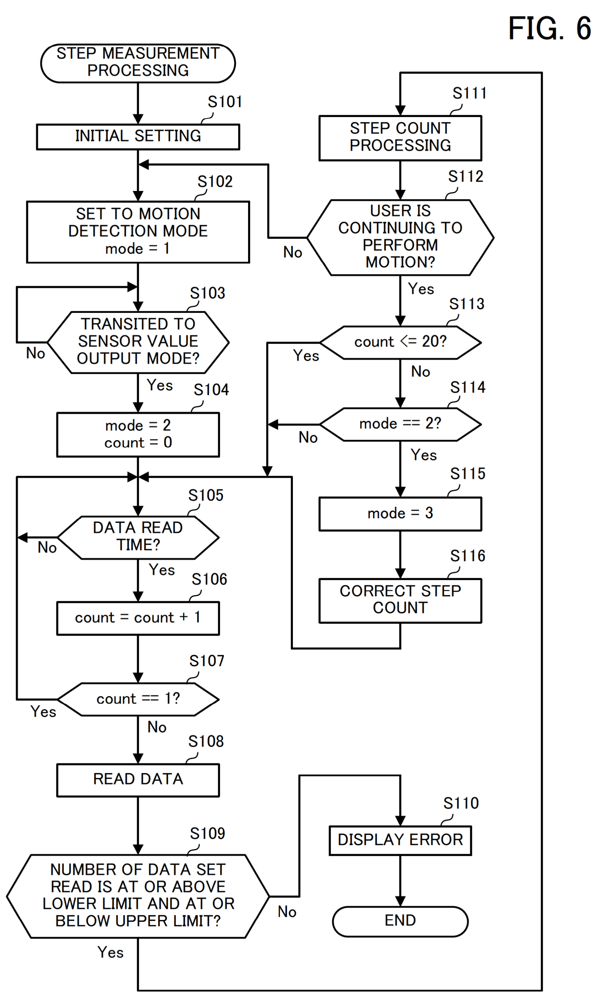

Processing for measuring the number of steps based on the concept explained above (step measurement processing) is explained with reference to FIG. 6. Although the controller 110 basically starts executing the step measurement processing in response to the power of the step measurement device 100 being turned on, the controller 110 may start executing the step measurement processing upon being instructed via the inputter 130 to start measuring the number of steps.

Firstly, the controller 110 executes initial setting processing for the step measurement device 100 (step S101). The initial setting processing includes performing initialization of the step count, initialization of a timer, setting of interrupts (setting for disabling FIFO interrupts and setting for disabling operation mode transition interrupts), and the like. The initialization of the step count clears a step count value, which indicates a value of the number of steps counted, to "0". The timer is a component for periodically reading data from the FIFO buffer (a component for determining, in step S105 described below, whether reached a data read time) and may also generate a timekeeping interrupt periodically (for example, every second) and notify the controller 110 of the data read time. In the case of this configuration, the initial setting processing is taken to include performing setting for interrupts such that a timekeeping interrupt is generated every time a second of time elapses, for example.

The controller 110 then sets the operation mode of the body motion detector 150 to the motion detection mode and sets a value of 'mode', which is a variable indicating an internal mode status of the step measurement processing, to "1" (step S102). The value 1 as the value of 'mode' means that "the operation mode of the body motion detector 150 is set to the motion detection mode".

The controller 110 then determines whether the operation mode of the body motion detector 150 has transitioned to the sensor value output mode (step S103). This determination can be made by the controller 110 by checking the status of the operation mode notification terminal of the body motion detector 150, as described above.

In a case where the operation mode of the body motion detector 150 has not transitioned to the sensor value output mode (step S103; No), the processing returns to step S103.

In a case where the operation mode of the body motion detector 150 has transitioned to the sensor value output mode (step S103; Yes), the controller 110 sets the value of 'mode' to "2" and initializes a variable 'count' to "0" (step S104). The 'count' is a counter variable for counting the number of times the time at which the controller 110 is to read the data accumulated in the FIFO buffer of the body motion detector 150 (data read time as a target of the determination in step S105) has reached after the operation mode of the body motion detector 150 transitions to the sensor value output mode. The value "2" as the value of 'mode' means that "a predetermined period of time (twenty seconds in the present embodiment) has not yet elapsed since the operation mode of the body motion detector 150 is set to the sensor value output mode". This predetermined period of time is called the preliminary step measurement period and is a preliminary period to prevent the controller 110 from counting the number of steps due to motions other than walking by the user.

The controller 110 then determines whether reached the time at which the data accumulated in the FIFO buffer of the body motion detector 150 is to read (the data read time) (step S105). Since the controller 110 in the present embodiment is taken to read the data from the FIFO buffer of the body motion detector 150 every second, the determination in step S105 is a determination on whether one second has elapsed from the latest data read time. This determination may be made by the controller 110 by checking the timer value sequentially, or may be made by determining that "the data read time has reached" upon occurrence of an interrupt with the timekeeping interrupt described above.

In a case of not yet having reached the data read time (step S105; No), the processing returns to step S105.

In a case of having reached the data read time (step S105; Yes), the controller 110 adds one to the variable 'count' (step S106) and determines whether the value of 'count' is "1" (step S107). In a case where the value of the variable 'count' is "1" (step S107; Yes), the processing returns to step S105.

In a case where the value of the variable 'count' is not "1" (step S107; No), the controller 110 reads all the data accumulated in the FIFO buffer of the body motion detector 150 and extracts as data groups (step S108). By the processing in step S107 and step S108, in a case where the value of the 'count' is "1", the data groups accumulated in the FIFO buffer is not read, and in a case where the value of the 'count' is "2", all the data groups accumulated since the transition to the sensor value output mode are read together. In other words, the time at which the value of the 'count' is "2" is the time at which the data accumulated in the FIFO buffer is to read in a batch, and thus this time is called the batch read time.

Here, the reason why the controller 110 does not read the data groups accumulated in the FIFO buffer in a case where the value of the 'count' is "1". The configuration of reading the data accumulated in the FIFO buffer in a case where the value of the 'count' is "1" leads to, depending on the time of reading, a case where not a single set of data is read or a case where, in a case where any data is read, only data sets of a number that is considerably small than usual is read. Such configuration produces problems in that (i) even if data can be read, this data may be too small to be used for step measurement and thus may be discarded, and (ii) no option in the lower limit in step S109 exists other than setting to "0", rendering the error determination based on whether or not the number of data sets is at or above the lower limit meaningless.

In contrast, the configuration of not reading in a case where the value of the variable 'count' is "1" and reading the data accumulated in the FIFO buffer in a case where the value of the variable 'count' is "2" guarantees that data sets of a number more than the number of data sets than can normally be read are read, leading to avoidance of the aforementioned problems.

For the reason described above, the controller 110 does not read the data groups accumulated in the FIFO buffer in a case where the value of the 'count' is "1".

Again with reference to FIG. 6, the controller 110 determines whether the number of data sets read in step S108 is at or above the lower limit and at or below the upper limit (step S109). The lower limit and the upper limit are threshold values for making a determination on abnormalities in the sensor included in the body motion detector 150 and communication errors between the controller 110 and the body motion detector 150, as described above. For example, in the case where the sampling period of the body motion detector 150 is 0.1 second and the period of the data read time of the controller 110 is one second, the average number of data typically read is considered to be 10. Even upon occurrence of a discrepancy between the sampling period of the body motion detector 150 and the period of the data read time of the controller 110 due to low accuracy of the timer or other factors, the number of data to be read is expected to fall between 7 and 15. In this case, "7" is set as the lower limit and "15" is set as the upper limit, and in a case where not falling within these limits, the controller 110 determines that an abnormality has occurred.

The value of this upper limit is be set to twice a value of the normal upper limit (default value) for the batch read time. This is because the data at the value "1" as the 'count' is read together in a batch. By changing value of the upper limit as above, the controller 110 can make the error determination without problems even at the batch read time.

In a case where the number of the data sets read from the FIFO buffer by the controller 110 is below the lower limit or above the upper limit (step S109; No), the controller 110 determines that some abnormality has occurred, displays an error on the display of the outputter 140 (step S110), and ends the step measurement processing.

In a case where the number of the data sets read is at or above the lower limit and at or below the upper limit (step S109; Yes), the controller 110 executes processing for counting the number of steps based on the read data groups (step count processing) (step S111).

Although the step count processing is similar to the processing executed by conventional pedometers and thus explanation of the details of the step count processing is omitted, for example, the controller 110 detects a periodic motion of the user based on the read data groups, and in a case where this period falls within a predetermined value (for example, 0.2 seconds to 1.5 seconds), (i) calculates a value of the difference between the maximum and minimum values of the data within each period and (ii) in a case where this value is equal to or greater than a predetermined threshold value, treats a step count condition as satisfied and thereby increment the step count by the number of times this step count condition has been satisfied. Due to this configuration, while the operation mode of the body motion detector 150 is the sensor value output mode, the controller 110 can accurately count the number of steps with simple processing.

The controller 110 then stores the step count value in the storage 120, but while the value of 'mode' is "2" (during the preliminary step measurement period), the step count value is stored as a temporary value. This processing is intended to prevent the number of steps from being counted by motions other than walking. In the present embodiment, the preliminary step measurement period is twenty seconds, and the controller 110 does not show the user the count of steps during this period, and after elapse of the preliminary step measurement period, causes the outputter 140 to display the number of steps with addition of the number of steps taken during the preliminary step measurement period as the number of steps taken so far, and thereafter counts the number of steps with increment by one at each time and causes the outputter 140 to display.

The controller 110 then determines whether the user is continuing to perform the motion (step S112). Although any method may be used for this determination, for example, the controller 110 determines whether the user is continuing to perform the motion depending on whether at least one step is counted in step S111 as the number of steps.

In a case where the user is not continuing to perform the motion (step S112; No), the processing returns to step S102.

In a case where the user is continuing to perform the motion (step S112; Yes), the controller 110 determines whether the value of the 'count' is "20" or less (step S113). Although the configuration of comparing the 'count' with "20" is described, this value of "20" is mere an example. Since the preliminary step measurement period is twenty seconds in the present embodiment, the configuration of employing the value of "20" to be compared to the 'count' is described. In other words, in step S113, the controller 110 determines whether the preliminary step measurement period has elapsed.

In a case where the value of the 'count' is "20" or less (during the preliminary step measurement period) (step S113; Yes), the processing returns to step S105.

In a case where the value of the 'count' exceeds "20" (in a case where the step measurement period has elapsed) (step S113; No), the controller 110 determines whether the value of 'mode' is "2" (step S114).

In a case where the value of the variable 'mode' is not "2" (step S114; No), the processing returns to step S105.

In a case where the value of the variable 'mode' is "2" (step S114; Yes), the controller 110 sets the value of 'mode' to "3" (step S115). The value "3" as the value of 'mode' means that "the preliminary step measurement period (twenty seconds in the present embodiment) has elapsed since the operation mode of the body motion detector 150 is set to the sensor value output mode". In a case where the value of 'mode' is "3", the controller 110 counts the number of steps normally in step S111.

The controller 110 then corrects the step count (step S116) and returns the processing to step S105. In detail, in step S116, the controller 110 corrects the step count by incrementing the previously counted step count by one upon determining that a step count complementation condition is satisfied. In the present embodiment, the step count complementation condition is satisfied upon the time of the step count being the first time the step count is incremented after the preliminary step measurement period has elapsed. In the flowchart illustrated in FIG. 6, the processing of step S116 is executed immediately after the value of the variable 'mode' becomes "3" in step S115, so this step count complementation condition is always satisfied at execution of step S116, and thus the correction of the step count in step S116 is always performed.

The pedometer disclosed in Unexamined Japanese Patent Application Publication No. 2009-98947 achieves low power consumption with the configuration of determining that walking has stopped upon non-detection of a walking signal for a predetermined period of time and then switching from continuous operation to intermittent operation (operation with alternation of an inactive period and a detection period). However, in such conventional pedometers, the number of steps taken during the inactive period can only be estimated from the step pitch detected during the periods before and after the inactive period, leaving a room for improvement in accuracy of step measurement.

In contrast, in the step measurement device 100 according to the embodiment, through the step measurement processing described above, the controller 110 can reduce power consumption by setting the operation mode of the body motion detector 150 to the motion detection mode while the user is not walking, and also can perform more accurate step counting by correcting with the step count that is likely to be uncounted at the moment the user starts walking.

Note that the degree of freedom regarding the time at which the processing for correcting the step count is relatively high. Although FIG. 6 illustrates a case of correcting the step count at the first time the value of the variable 'count' exceeds "20", the step count may be corrected at the time the value of the variable 'count' reaches "2", for example. In this case, the step count complementation condition is satisfied upon the time of incrementing the step count being the first time the step count is incremented after the operation mode of the body motion detector 150 transitions from the motion detection mode to the sensor value output mode.

As another example, the time of correcting the step count is not limited to the time at which the value of the variable 'count' becomes "2", and the step count may similarly be corrected at any one of the times at which the value of the variable 'count' becomes 1 through 21.

Since the evaluation experiments conducted by the inventor have shown that one step count is almost certainly lost at the time of transition of the operation mode of the body motion detector 150 from the motion detection mode to the sensor value output mode, the above processing enables more accurate step count measurement in the case of using the motion detection mode, in spite of the simplicity of processing.

However, more strictly, the failure to count for counting the number of steps at the time of transition of the operation mode of the body motion detector 150 from the motion detection mode to the sensor value output mode does not always occur. In order to take into account the case where no failure to count occurs, a first modified example is described in which the controller 110 corrects the step count based on the amount of step count incremented during the preliminary step measurement period.

For example, as illustrated in FIG. 5, in a case where a user starts walking at time (X), data up to the sampling period including time (X) is discarded, and only data after this time is read. Comparing the data groups before time (2) ( data group (1) and data group (2)) with the data groups after time (2) (data groups (3) through (20)), although the step count calculated based on the data groups before time (2) is likely to contain missing data due to the discard of the sensor values during the motion detection mode, the step count calculated based on the data groups after time (2) is always calculated by using the data obtained in the sensor value output mode only, and thus the possibility of missing data being contained in this step count can be considered zero.

Here, a data group consisting of data group (1) and data group (2) is taken to be a first data group, and a data group consisting of data groups (3) through (20) is taken to be a second data group.

Then, the following formulae hold. 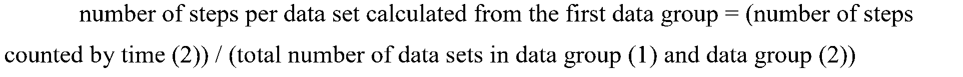 number of steps per data set calculated from the first data group = (number of steps counted by time (2)) / (total number of data sets in data group (1) and data group (2)) 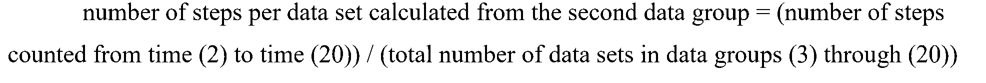 number of steps per data set calculated from the second data group = (number of steps counted from time (2) to time (20)) / (total number of data sets in data groups (3) through (20))

Additionally, the number of steps can be measured more accurately by setting the condition below as a step count complementation condition. 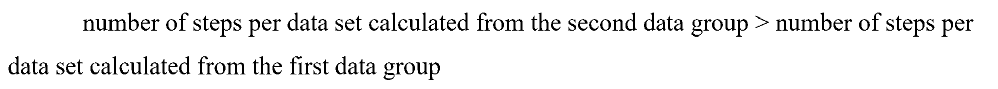 number of steps per data set calculated from the second data group > number of steps per data set calculated from the first data group

For example, a case is considered below in which eight data sets are read every second, one step is counted every second, and the number of data sets in data group (1) is three.

Then, the condition in a case where two steps are counted in data group (1) and data group (2) of FIG. 5 is as below. $18 / \left(8\times 18\right) < 2 / \left(3+8\right)$

Since the above step count complementation condition is not satisfied, the processing for incrementing the step count is not executed.

Conversely, the condition in a case where one step is counted in data group (1) and data group (1) of FIG. 5 is as below. $18 / \left(8\times 18\right) > 1 / \left(3+8\right)$ Since the above step count complementation condition is satisfied, the processing for incrementing the step count by one is executed.

In the manner as described above, the number of steps can be more accurately measured based on the way of counting the number of steps taken during the preliminary step measurement period.

Furthermore, although the first modified example above describes a case of simply determining whether to increment the step count based on the number of steps per data set in the preliminary step measurement period, as a second modified example, the controller 110 may analyze a relationship between the increase or decrease in data values in data groups (2) through (20) and the timings at which steps are counted and determine whether to increment or not increment the step count based on whether the data group (1) contains data on the timings at which the steps are to be counted. With this configuration, the step count complementation condition is satisfied upon the data group acquired immediately after transition of the operation mode of the body motion detector form the motion detection mode to the sensor value output mode (in other words, data group (1)) not satisfying a data group step count condition. The data group step count condition is satisfied upon data group (1) containing data on the timing at which a step is to be counted.

For example, assuming a case where the analysis of the controller 110 results in revealing that data group (1) contains four data sets, data groups (2) through (20) contain data of repeated eight data sets "increase/increase/increase/increase/decrease/decrease/decrease/decrease", and one step is counted immediately after each switch from "increase" to "decrease" (timing of the fifth data in this example). In the case of this example, in a case where the data of data group (1) is "0/increase/increase/decrease", since a data set at the timing at which a step is to be counted is contained, the controller 110 does not increment the step count. In a case where the data of data group (1) is "0/decrease/decrease/increase", since a data set at the timing at which a step is to be counted is not contained, the controller 110 increments the step count. The first data in data group (1) is taken to be "0" since the first data set contained in data group (1) cannot be determined whether increase or decrease.

Furthermore, although the second modified example above describes configuration in which the controller 110 determines whether to increment the step count based on increase and decrease in values of data sets contained in each data group, as a third modified example, the controller 110 may analyze a relationship between a shape of a waveform obtained from the data groups and the timings at which steps are to be counted and determine whether to increment or not increment the step count based on whether the shape of the waveform of data group (1) contains the timings at which the steps are to be counted. With this configuration, the step count complementation condition is satisfied upon the data group acquired immediately after transition of the operation mode of the body motion detector from the motion detection mode to the sensor value output mode (in other words, data group (1)) not satisfying a data group step count condition similarly to the modified example 2, whereas the data group step count condition is satisfied upon the shape of the waveform of data group (1) containing data on the timing at which a step is to be counted.

With the configuration of the second and third modified examples, the controller 110 analyzes the relationship between the way the value of the data in data group (1) changes and the timing at which a step is to be counted, thus enabling more accurate step measurement.

As described above, the step measurement device 100 includes a body motion detector 150 that acquires a magnitude of a body motion as a sensor value and that operates in either a motion detection mode for determining whether the acquired sensor value exceeds a predetermined threshold value or a sensor value output mode for outputting the sensor value at predetermined time intervals as an operation mode of the body motion detector 150, in which the operation mode of the body motion detector 150 transits from the motion detection mode to the sensor value output mode in response to a determination being made in the motion detection mode that the sensor value exceeds the threshold value, and the controller 110, and the controller 110 extracts data groups from a plurality of the sensor values output in the sensor value output mode, in response to a determination being made that the extracted data groups satisfy a step count condition, increments a step count by a number of times the step count condition has been satisfied, and further increments the step count by one in response to a determination being made, in incrementing the step count in response to the step count condition being satisfied, that a step count complementation condition is satisfied. This configuration enables more accurate step counting by correction with the step count that is likely to be uncounted at a time at which the user starts walking.

Furthermore, the step count condition is satisfied upon a difference between maximum and minimum values of the sensor value within a predetermined period being equal to or greater than a predetermined threshold value. Setting the step count condition as above enables accurately counting the number of steps with simple processing.

Furthermore, the step count complementation condition is satisfied upon a time of incrementing the step count being a first time the step count is incremented after transition of the operation mode of the body motion detector from the motion detection mode to the sensor value output mode. Since the evaluation experiments conducted by the inventor have shown that one step count is almost certainly lost at the time of transition of the operation mode of the body motion detector 150 from the motion detection mode to the sensor value output mode, setting the step count complementation condition as above enables more accurate step count measurement in the case of using the motion detection mode, in spite of the simplicity of processing.

Furthermore, the step count complementation condition is satisfied upon a number of steps per data set calculated from a first data group that is included in the data groups being smaller than a number of steps per data set calculated from the second data group being included in the data groups and being output after the first data group. By setting the step count complementation condition as above, the number of steps can be more accurately measured based on the number of steps counted during the preliminary step measurement period.

Furthermore, the step count complementation condition is satisfied upon a data group acquired immediately after transition of the operation mode of the body motion detector from the motion detection mode to the sensor value output mode not satisfying a data group step count condition. By setting the step count complementation condition as above, a determination on whether to correct the number of steps is made in consideration of the way the value of the data in the data group immediately after the transition to the sensor value output mode and the timing at which a step is to be counted, thus enabling more accurate step measurement.

Furthermore, the body motion detector 150 includes a FIFO buffer to accumulate the sensor value output at the predetermined time intervals in the sensor value output mode, and the controller 110 reads the plurality of sensor values accumulated in the FIFO buffer in the sensor value output mode at a read time at every predetermined period, and does not read the sensor values from the FIFO buffer at the read time immediately after transition of the operation mode of the body motion detector 150 from the motion detection mode to the sensor value output mode, and reads all the sensor values accumulated in the FIFO buffer at a batch read time that is a next read time. This configuration can prevent occurrence of situations in which not a single set of data is read from the FIFO buffer, or in a case where any data is read, only data sets of a number that is considerably small than usual are read. As a result, discard of data that cannot be used for measurement of step counting due to the number of data sets read from the FIFO buffer being too small can be prevented, and additionally, error determination on whether the number of data sets read is above the lower limit or not can be made without any problem.

Furthermore, the controller 110 determines whether a number of the sensor values read at the read time is at or above a lower limit and at or below a upper limit, whereas sets a value of the upper limit to twice a value of a default value for the batch read time. Due to this, the error determination based on whether the number of data sets read is at or below the upper limit can also be made without any problem.

The step measurement device 100 is not limited to a smart watch and an electronic watch, and can be achieved by a smartphone, or a computer such as a portable tablet, a personal computer (PC), or the like. Specifically, in the aforementioned embodiment, the description is made assuming that the program for the step measurement processing and other related processing to be executed by the controller 110 is pre-stored in the storage 120. However, storing and distributing the program on a non-transitory computer-readable recording medium such as a compact disc read-only memory (CD-ROM), a digital versatile disc (DVD), a magneto-optical, disc (MO), a memory card, and a USB memory, and reading out and installing this program on a computer enables achieving a computer that is capable of executing the various processings described above.

Furthermore, the program can be superimposed on a carrier wave and applied via a communication medium such as the internet. For example, the program may be posted to and distributed via a bulletin board system (BBS) on a communication network. Moreover, a configuration may be used in which the various processings described above are executed by starting the program and, under the control of the operating system (OS), executing the program in the same manner as other application programs.

Furthermore, the controller 110 may be achieved solely by a freely-selected processor unit, such as a single processor, a multiprocessor, and a multi-core processor, by one or more of these freely-selected processor units, or by combining one or more of these freely-selected processor units with one or more processing circuits, such as an application specific integrated circuit (ASIC) and a field-programmable gate array (FPGA).

Although the preferred embodiment of the present disclosure is described above, the present disclosure is not limited to specific embodiments and includes the invention defined in the appended claims and the equivalent range thereof.

The foregoing describes some example embodiments for explanatory purposes. Although the foregoing discussion has presented specific embodiments, persons skilled in the art will recognize that changes may be made in form and detail without departing from the broader spirit and scope of the invention. Accordingly, the specification and drawings are to be regarded in an illustrative rather than a restrictive sense. This detailed description, therefore, is not to be taken in a limiting sense, and the scope of the invention is defined only by the included claims, along with the full range of equivalents to which such claims are entitled.

## Claims

1. A step measurement device (100), comprising:
a body motion detector (150) to acquire a magnitude of a body motion as a sensor value, the body motion detector (150) being to operate in either a motion detection mode or a sensor value output mode as an operation mode of the body motion detector (150), the motion detection mode being for determining whether the acquired sensor value exceeds a predetermined threshold value, the sensor value output mode being for outputting the sensor value at predetermined time intervals, the operation mode of the body motion detector (150) being to transit from the motion detection mode to the sensor value output mode in response to a determination being made in the motion detection mode that the sensor value exceeds the threshold value; and
a controller (110), wherein
the controller (110)
extracts data groups from a plurality of the sensor values output in the sensor value output mode,
in response to a determination being made that the extracted data groups satisfy a step count condition, increments a step count by a number of times the step count condition has been satisfied, and
further increments the step count by one in response to a determination being made, in incrementing the step count in response to the step count condition being satisfied, that a step count complementation condition is satisfied.

2. The step measurement device (100) according to claim 1, wherein
the step count condition is satisfied upon a difference between maximum and minimum values of the sensor value within a predetermined period being equal to or greater than a predetermined threshold value.

3. The step measurement device (100) according to claim 1 or 2, wherein
the step count complementation condition is satisfied upon a time of incrementing the step count being a first time the step count is incremented after transition of the operation mode of the body motion detector (150) from the motion detection mode to the sensor value output mode.

4. The step measurement device (100) according to any one of claims 1 to 3, wherein
the step count complementation condition is satisfied upon a number of steps per data set calculated from a first data group being smaller than a number of steps per data set calculated from a second data group, the first data group being included in the data groups, the second data group being included in the data groups and being output after the first data group.

5. The step measurement device (100) according to any one of claims 1 to 4, wherein
the step count complementation condition is satisfied upon a data group acquired immediately after transition of the operation mode of the body motion detector (150) from the motion detection mode to the sensor value output mode not satisfying a data group step count condition.

6. The step measurement device (100) according to any one of claims 1 to 5, wherein
the body motion detector (150) includes a FIFO buffer to accumulate the sensor value output at the predetermined time intervals in the sensor value output mode, and
the controller (110)
reads the plurality of sensor values accumulated in the FIFO buffer in the sensor value output mode at a read time at every predetermined period, and
does not read the sensor values from the FIFO buffer at the read time immediately after transition of the operation mode of the body motion detector (150) from the motion detection mode to the sensor value output mode, and reads all the sensor values accumulated in the FIFO buffer at a batch read time that is a next read time.

7. The step measurement device (100) according to claim 6, wherein
the controller (110)
determines whether a number of the sensor values read at the read time is at or above a lower limit and at or below an upper limit, whereas sets a value of the upper limit to twice a value of a default value for the batch read time.

8. A step measuring method implemented by a computer of a step measurement device (100) including a body motion detector (150) to acquire a magnitude of a body motion as a sensor value, the body motion detector (150) being to operate in either a motion detection mode or a sensor value output mode as an operation mode of the body motion detector (150), the motion detection mode being for determining whether the acquired sensor value exceeds a predetermined threshold value, the sensor value output mode being for outputting the sensor value at predetermined time intervals, the operation mode of the body motion detector (150) being to transit from the motion detection mode to the sensor value output mode in response to a determination being made in the motion detection mode that the sensor value exceeds the threshold value, the step measuring method comprising:
extracting data groups from a plurality of the sensor values output from the body motion detector (150);
in response to a determination being made that the extracted data groups satisfy a step count condition, incrementing a step count by a number of times the step count condition has been satisfied; and
further incrementing the step count by one in response to a determination being made, in incrementing the step count in response to the step count condition being satisfied, that a step count complementation condition is satisfied.

9. The step measuring method according to claim 8, wherein
the step count condition is satisfied upon a difference between maximum and minimum values of the sensor value within a predetermined period being equal to or greater than a predetermined threshold value.

10. The step measuring method according to claim 8 or 9, wherein
the step count complementation condition is satisfied upon a time of incrementing the step count being a first time the step count is incremented after transition of the operation mode of the body motion detector (150) from the motion detection mode to the sensor value output mode.

11. The step measuring method according to any one of claims 8 to 10, wherein
the step count complementation condition is satisfied upon a number of steps per data set calculated from a first data group being smaller than a number of steps per data set calculated from a second data group, the first data group being included in the data groups, the second data group being included in the data groups and being output after the first data group.

12. A program causing a controller (110) to:
extract, from a body motion detector (150) to acquire a magnitude of a body motion as a sensor value, data groups from a plurality of the sensor values output from the body motion detector (150), the body motion detector (150) being to operate in either a motion detection mode or a sensor value output mode as an operation mode of the body motion detector (150), the motion detection mode being for determining whether the acquired sensor value exceeds a predetermined threshold value, the sensor value output mode being for outputting the sensor value at predetermined time intervals, the operation mode of the body motion detector (150) being to transit from the motion detection mode to the sensor value output mode in response to a determination being made in the motion detection mode that the sensor value exceeds the threshold value;
in response to a determination being made that the extracted data groups satisfy a step count condition, increment a step count by a number of times the step count condition has been satisfied; and
further increment the step count by one in response to a determination being made, in incrementing the step count in response to the step count condition being satisfied, that a step count complementation condition is satisfied.

13. The program according to claim 12, wherein
the step count condition is satisfied upon a difference between maximum and minimum values of the sensor value within a predetermined period being equal to or greater than a predetermined threshold value.

14. The program according to claim 12 or 13, wherein
the step count complementation condition is satisfied upon a time of incrementing the step count being a first time the step count is incremented after transition of the operation mode of the body motion detector (150) from the motion detection mode to the sensor value output mode.

15. The program according to any one of claims 12 to 14, wherein
the step count complementation condition is satisfied upon a number of steps per data set calculated from a first data group being smaller than a number of steps per data set calculated from a second data group, the first data group being included in the data groups, the second data group being included in the data groups and being output after the first data group.
